# EUROPÄISCHE PATENTSCHRIFT

(11) **EP 4 363 246 B1**
(45) Veröffentlichungstag und Bekanntmachung des Hinweises auf die Patenterteilung: **14.05.2025**
(21) Anmeldenummer: 21830603.3
(22) Anmeldetag: 14.12.2021
(51) Int. Cl.: B60C 13/02, B60C 13/00

(54) **FAHRZEUGLUFTREIFEN**
PNEUMATIC VEHICLE TIRE
PNEUMATIQUE DE VÉHICULE

(30) Priorität: 28.06.2021 DE 102021206642
(43) Veröffentlichungstag der Anmeldung: 08.05.2024
(73) Patentinhaber: Continental Reifen Deutschland GmbH, 30175 Hannover (DE)
(72) Erfinder: ÖZÜDURU, Ahmet, 30165 Hannover (DE); HENZE, Eugen, 30165 Hannover (DE); KUNIAK, Lubos, 30165 Hannover (DE)
(74) Vertreter: Continental Corporation
(86) Internationale Anmeldenummer: PCT/DE2021/200260
(87) Internationale Veröffentlichungsnummer: WO 2023/274437

(56) Entgegenhaltungen:
- EP-A1- 3 640 057
- JP-A- 2017 144 799
- US-A1- 2015 165 831

## Beschreibung

Die Erfindung betrifft einen Fahrzeugluftreifen mit einem Laufstreifen, einem Gürtelverband, einer Radialkarkasse und mit Seitenwänden, welche jeweils in ihrem radial äußeren Bereich zumindest zwei konzentrisch zur Kreisringform der Seitenwand verlaufende Reihen aus parallelogrammförmigen Erhebungen mit einer gegenüber dem sonstigen Niveau der Seitenwand ermittelten Höhe von 0,80 mm bis 1,50 mm aufweisen, wobei zwischen den Erhebungen innerhalb einer Reihe und zwischen einander benachbarten Reihen Zwischenräume mit jeweils insbesondere konstanten Breiten vorhanden sind.

Ein derartiger Fahrzeugluftreifen ist beispielsweise aus der EP 3 129 241 B1 bekannt. Die Seitenwände des Fahrzeugluftreifens sind in ihrem radial äußeren Bereich mit einer die Seitenwände lokal verdickenden Schutzschicht aus Gummi verstärkt, welche durch ein Einschnittnetz aus zumindest einem in Umfangsrichtung der Seitenwand umlaufenden Einschnitt und einer Vielzahl von in radialer Richtung verlaufenden Einschnitte in Blockelemente, daher in Erhebungen, gegliedert ist. Die Tiefe der Einschnitte beträgt zumindest bereichsweise höchstens 50 % der Dicke der Schutzschicht an der Stelle des Verlaufs des jeweiligen Einschnittes. Bei derart mit Gummi-Schutzschichten versehenen Seitenwänden ist die Gefahr der Beschädigung der unterhalb der Seitenwände verlaufenden Karkasseinlage, etwa bei Kontakt des Reifens mit Bordsteinen und dergleichen, merklich verringert. Das enge Einschnittnetz stellt eine große Flexibilität der Schutzschicht sicher, welche jedoch zu Lasten der Robustheit der blockartigen Struktur geht.

Fahrzeugluftreifen mit Seitenwänden sind weiter in der EP 3640057 A1, der JP 2017144799 A sowie der US 2015165831 A1 offenbart.

Der Erfindung liegt die Aufgabe zugrunde, bei einem Fahrzeugluftreifen der eingangs genannten Art, die Robustheit der blockartigen Struktur zu erhöhen ohne Einbußen bei der Flexibilität in Kauf nehmen zu müssen.

Gelöst wird die gestellte Aufgabe erfindungsgemäß dadurch, dass die Reihen von Erhebungen in Umfangsrichtung der Seitenwand unter gegenseitiger Überlappung der Erhebungen gegeneinander versetzt sind, wobei auch die Zwischenräume zwischen den Erhebungen von Reihe zu Reihe und ohne miteinander zu fluchten in Umfangsrichtung gegeneinander versetzt sind.

Durch den gegenseitigen Versatz sind die einzelnen Erhebungen strukturell sehr robust, insbesondere durch die Möglichkeit einer optimalen gegenseitigen Abstützung infolge der in radialer Richtung gegeneinander versetzten Zwischenräume. Diese versetzten Zwischenräume zwischen den Erhebungen in den einzelnen Reihen gewährleisten nach wie vor eine hohe Flexibilität der Seitenwand unter Belastungen.

Bei einer bevorzugten Ausführung weisen die Erhebungen in sämtlichen Reihen in Draufsicht eine Parallelogrammform mit zwei spitzen Winkeln von 30° bis 70° auf, wobei die Winkel in den Erhebungen innerhalb einer Reihe und vorzugsweise in den Erhebungen sämtlicher Reihen übereinstimmen und wobei die Erhebungen in sämtlichen Reihen bezüglich der Umfangsrichtung gleich ausgerichtet sind. Eine derartige Ausführung erleichtert die Ausgestaltung und Anordnung der Erhebungen mit Zwischenräumen zwischen den Reihen, die, ohne aneinander anzuschließen, in Umfangsrichtung gegeneinander versetzt sind.

Bei einer weiteren bevorzugten Ausführung, die sich zusätzlich optisch sehr ansprechend gestalten lässt, sind die Erhebungen in sämtliche Reihen in Draufsicht rechteckig, insbesondere quadratisch.

Eine besonders gleichmäßige Verteilung des von den Erhebungen beanspruchten Gummimaterials wird dadurch erzielt, wenn sämtliche Reihen innerhalb eines sich in der Umfangsrichtung erstreckenden Seitenwandabschnittes die gleiche Anzahl von Erhebungen aufweisen. In diesem Zusammenhang ist es ferner vorteilhaft, wenn die Erhebungen in den Reihen innerhalb eines sich in der Umfangsrichtung erstreckenden Seitenwandabschnittes jeweils übereinstimmend gestaltet sind und vorzugsweise sämtliche Erhebungen gleichartig gestaltet sind.

Weitere vorteilhafte Ausgestaltungen der Erhebungen unterstützen ihre Robustheit und ihre Schutzwirkung. Gemäß einer dieser Ausgestaltungen weisen die Erhebungen in der Umfangsrichtung der Seitenwand eine Länge von 15,00 mm bis 30,00 mm, insbesondere von 20,00 mm, und ferner in der radialen Richtung eine Breite von 5,00 mm bis 12,00 mm auf. In Draufsicht quadratische Erhebungen besitzen bevorzugt eine Kantenlänge von 6,00 mm bis 20,00 mm.

Besonders robust gegenüber Verformungen sind ferner Erhebungen, die Seitenflächen aufweisen, welche unter einem Winkel von 30° bis 90°, insbesondere bis 60°, gegenüber dem Niveau der Seitenwand verlaufen. Bei Winkeln kleiner 90° sind die Seitenflächen nach außen geneigt.

Die Breiten der Zwischenräume zwischen den Erhebungen innerhalb einer Reihe betragen 1,00 bis 7,00 mm, insbesondere mindestens 2,00 mm, und zwischen einander benachbarten Reihen 1,00 bis 5,00 mm, insbesondere mindestens 1,5 mm. Breiten in dieser Größenordnung sind für eine gute Flexibilität der Seitenwand unter den beim Betrieb der Reifen auftretenden Belastungen besonders vorteilhaft.

Für eine gute Schutzwirkung der Erhebungen bei Kontakt mit Bordsteinkanten und dergleichen sollte ein relativ großer radialer Bereich der Seitenwand von Erhebungen bedeckt sein. Es ist daher von Vorteil, wenn die Anzahl der Reihen drei bis fünf beträgt und wenn die Reihen auf der Seitenwand einen Seitenwandabschnitt bedecken, welcher sich in radialer Richtung zwischen einer ersten Höhe, die 40 % bis 50 % der Querschnittshöhe des Reifens beträgt und einer zweiten Höhe, die 80 % bis 97 % der Querschnittshöhe des Reifens beträgt, erstreckt. Diesbezüglich ist es zusätzlich vorteilhaft, wenn die Reihen über zumindest einen Großteil des Umfanges der Seitenwand, insbesondere über zumindest drei Viertel des Umfanges durchgehend verlaufen.

Um die Erhebungen und die Zwischenräume zwischen den Erhebungen zusätzlich auf optisch ansprechende Weise zu gestalten, sind bei einer bevorzugten Ausführung Zwischenräume zwischen den Erhebungen und zwischen benachbarten Reihen mit einer Schraffur aus einer Vielzahl von parallel zueinander verlaufenden Mikrorippen mit einem vorzugsweise kuppel- oder dreieckförmigen Querschnitt und mit einer maximalen Höhe von 0,20 mm bis 0,30 mm gegenüber dem Seitenwandniveau und einer ebensolchen Breite an ihrer Basis versehen. Solche Mikrorippen können auch über Oberflächen von Erhebungen verlaufen, wodurch eine äußerst attraktive Gestaltung der Seitenwand erzielbar ist.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Querschnitt einer Hälfte eines Fahrzeugluftreifens,
Fig. 2 eine vergrößerte Darstellung eines Ausschnittes der äußeren Kontur im Bereich der Seitenwand des Fahrzeugluftreifens aus Fig. 1,
Fig. 3 eine Ansicht eines Umfangsabschnittes der Seitenwand mit einer Ausführungsform der Erfindung und
Fig. 4 eine Ansicht eines Umfangsabschnittes einer Seitenwand mit einer weiteren Ausführungsform der Erfindung.

Gemäß der Erfindung ausgeführte Fahrzeugluftreifen sind Reifen in Radialbauart für Kraftfahrzeuge, vorzugsweise Reifen für Personenkraftwagen, SUVs, Vans oder Light-Trucks.

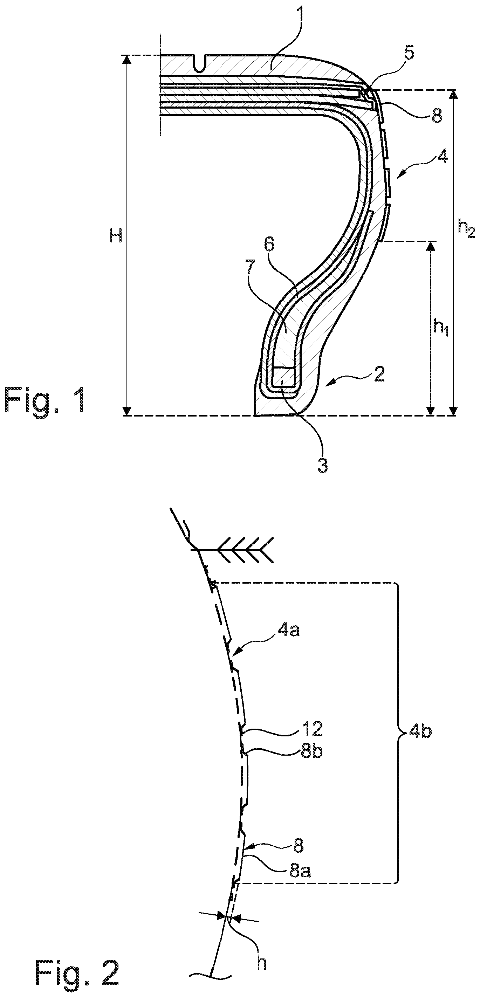

Der in Fig.1 gezeigte Fahrzeugluftreifen weist als wesentliche Bestandteile einen Laufstreifen 1, welcher auf nicht gezeigte Weise mit einer Laufstreifenprofilierung versehen ist, Wulstbereiche 2 mit Wulstkernen 3, Seitenwände 4, einen mehrlagiger Gürtelverband 5 und eine Karkasseinlage 6 auf. Radial außerhalb des Wulstkernes 3 ist ein Kernprofil 7, gemeinsam mit dem Wulstkern 3 den Reifen umlaufend, eingebaut.

Die Seitenwände 4 bestehen aus einem Gummimaterial und verlaufen reifenaußenseitig entlang der Karkasseinlage 6 zwischen dem Gürtelverband 5 und den Wulstbereichen 2. Um durch Gewichtsreduktion einen geringen Rollwiderstand des Fahrzeugluftreifen zu unterstützen, sind die Seitenwände 4 relativ dünn gehalten. Bei dünnen Seitenwänden 4 ist die Gefahr, dass bei Kontakt mit Bordsteinkanten oder dergleichen die Karkasseinlage 6 mitbeschädigt wird, größer als bei dickeren Seitenwänden.

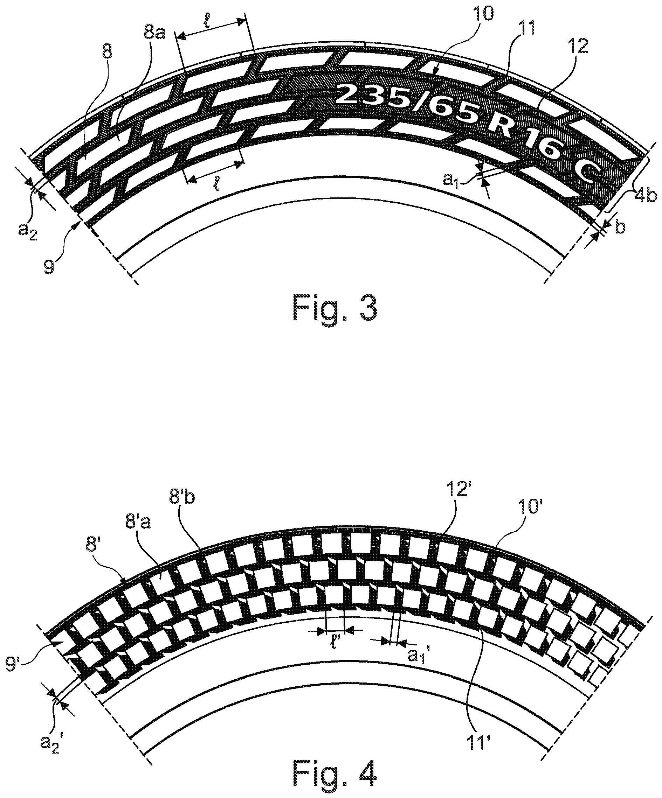

Um die Seitenwände 4 gegenüber äußerer Einwirkung robuster auszuführen sind sie, wie insbesondere Fig. 3 und Fig. 4 zeigen, mit parallel zueinander und nebeneinander verlaufenden Reihen 9, 9' aus blockförmigen Erhebungen 8, 8' verstärkt, welche vom sonstigen Seitenwandniveau 4a (Fig. 2) abragen und gegenüber diesem Niveau eine Deckfläche 8'a mit einer konstante Höhe h aufweisen, die 0,80 mm bis 2,00 mm, insbesondere 1,00 mm beträgt. Die Erhebungen 8, 8' weisen von der Deckfläche 8a, 8'a auf das Seitenwandniveau 4a abfallende Seitenflächen 8b, 8'b auf. Bei der Ausführung gemäß Fig. 2 und Fig 3 sind die Seitenflächen 8b unter einem Winkel von 30° bis 60°, insbesondere 45°, gegenüber dem Seitenwandniveau 4a geneigte, bei der Ausführung gemäß Fig. 4 sind die Seitenflächen 8'b unter einem Winkel von 70° bis 90° gegenüber dem Seitenwandniveau 4a geneigt. Die Reihen 9, 9', deren Anzahl zumindest zwei und insbesondere bis zu fünf beträgt, folgen konzentrisch der Kreisringform der Seitenwand 4 und sind daher Kreisringabschnitte, die innerhalb eines breiteren, sämtliche Reihen 9, 9' umfassenden Seitenwandabschnittes 4b, welcher über den Umfang der Seitenwand 4 oder einen Teil des Umfanges, beispielsweise über zumindest drei Viertel des Umfanges, durchgehend verlaufen.

Wie insbesondere Fig. 1 zeigt, bedeckt der Seitenwandabschnitt 4b in radialer Richtung einen Seitenwandbereich zwischen einer ersten Höhe h₁, die 30 % bis 50 % der Querschnittshöhe H beträgt und einer zweiten Höhe h₂, die 80 % bis 97 % der Querschnittshöhe H beträgt.

Bei den in Fig. 3 und Fig. 4 gezeigten bevorzugten Ausführung stimmt die Anzahl der Erhebungen 8, 8' in den Reihen 9, 9' innerhalb eines Seitenwandabschnitt 4b überein, wobei innerhalb jeder Reihe 9, 9' bevorzugt gleich große und gleich gestaltete Erhebungen 8, 8' in Parallelogrammform - in Draufsicht - vorhanden sind.

Fig. 3 zeigt eine Ausführung mit parallelogrammförmigen Erhebungen 8 mit zwei spitzen Winkeln von 30° bis 70° und zwei entsprechenden stumpfen Winkeln, zwei längeren, in der Umfangserstreckung der Seitenwand 4 und gemäß der Kreisringform leicht gekrümmten längeren Seiten mit einer entlang ihrer Sehne ermittelten Länge l von 15,00 mm bis 30,00 mm, insbesondere mindestens 20,00 mm, wobei die Länge l der innerhalb der radial innersten Reihe 9 befindlichen Erhebungen 8 geringer ist als die Länge l der Erhebungen 8 in der radial äußersten Reihe 9 und von der innersten zur äußersten zunimmt. Die in radialer Richtung ermittelte Breite b der Erhebungen 8 beträgt 5,00 mm bis 12,00 mm, wobei die Breite b in sämtlichen oder einigen Reihen 9 gleich ist oder von der radial innersten Reihe 9 in Richtung zur radial äußersten Reihe 9 zunimmt.

Innerhalb der Reihen 9 befinden sich Zwischenräume 11 zwischen den Erhebungen 8, deren Breite a₁ am Seitenwandniveau 4a in der Größenordnung von 1,00 mm bis 5,00 mm, insbesondere mindestens 2,00 mm, beträgt und zwischen den Erhebungen 8 innerhalb einer bestimmten Reihe 9 vorzugsweise konstant ist. Auch zwischen einander benachbarten Reihen 9 sind Zwischenräume 12 vorhanden, deren Breite a₂ 1,00 mm bis 5,00 mm, insbesondere 2,00 mm bis 5,00 mm, beträgt, wobei die Breite a₂ zunehmend größer sein kann, je weiter radial außen sich eine Reihe 9 befindet.

Die gegenseitige Anordnung der Erhebungen 8 in den einander benachbarten Reihen 9 ist derart, dass sie von Reihe 9 zu Reihe 9 in die gleiche Umfangsrichtung über beispielsweise 25 % bis 50 % ihrer Längen l zueinander versetzt sind und daher einander überlappen, derart, dass keine miteinander fluchtenden Zwischenräume 11 vorhanden sind.

Die Zwischenräume 11, 12 zwischen den Erhebungen 8 sowie zwischen benachbarten Reihen 9 sind bei der in Fig. 3 gezeigten bevorzugten Ausführung mit einer Schraffur aus parallel zueinander verlaufenden Mikrorippen 10 mit einem kuppel- oder dreieckförmigen Querschnitt mit einer maximalen Höhe von 0,20 mm bis 0,30 mm gegenüber dem sonstigen Seitenwandniveau 4a und einer ebensolchen Breite an ihrer Basis versehen. Diese Mikrorippen 10 können ferner an ihrer Basis einen gegenseitigen Abstand von 0,10 mm bis 0,20 mm aufweisen. Aus gestalterischen Gründen kann ferner vorgesehen sein, dass sich Mikrorippen 10 über die Oberflächen der Erhebungen 8 erstrecken. Zusätzlich kann je ein schmaler, etwa 1,50 mm bis 2,00 mm breiter Begrenzungstreifen radial innerhalb der radial innersten Reihe 9 und radial außerhalb der radial äußersten Reihe 9 mit Mikrorippen 10, wie beschrieben, versehen sein. Wie Fig. 3 zeigt kann über eine Reihe 9 oder über mehrere Reihen 9 eine Beschriftung aus beliebigen Schriftzeichen als lokale zusätzliche Erhebungen ausgebildet sein.

Die Erhebungen 8 können anstelle der dargestellten und beschriebenen Parallelogrammform mit zwei spitzen und zwei stumpfen Winkeln in Draufsicht auch die Gestalt von Rhomben aufweisen. Alternativ weisen die Erhebungen die Gestalt von in Umfangsrichtung länglichen Rechtecken auf.

Fig. 4 zeigt eine Ausführung mit in Draufsicht quadratischen Erhebungen 8' mit einer Kantenlänge l' von 6,00 mm bis 20,00 mm. Je weiter radial innen sich die Erhebungen 8' befinden umso kleiner ist ihre Kantenlänge l'. Die Zwischenräume 11', 12' zwischen den Erhebungen 8' weisen eine Breite a₁' von 3,0 mm bis 7,00 mm auf, die Breite a₂' zwischen benachbarten Reihen 9' beträgt 1,5 mm bis 5,00 mm. Zwischenräume 11', 12' zwischen Erhebungen 8' sind derart mit einer Schraffur aus jeweils parallel zueinander verlaufenden Mikrorippen 10' versehen, dass bei Sicht auf die Seitenwand 4 der Eindruck von würfelförmigen Erhebungen 8' entsteht. Dabei können auch über Oberflächen von Erhebungen 8' Mikrorippen 10' verlaufen. Die Ausgestaltung der Mikrorippen 10' entspricht jener der Mikrorippen 10.

Bei einer weiteren nicht gezeigten Ausführung unterscheidet sich die Anzahl der in einer Reihe vorgesehen Erhebungen von der Anzahl der in zumindest einer weiteren Reihe vorgesehenen Erhebungen, indem beispielsweise anstelle von zwei ansonsten vorgesehenen Erhebungen jeweils eine Erhebung vorhanden ist. Die Dimensionierung der Erhebungen und der Zwischenräume wird aufeinander abgestimmt, um eine gegenseitige Überlappung der Erhebungen aus den einander benachbarten Reihen sicherzustellen.

### Bezugszeichenliste

- 1: Laufstreifen
- 2: Wulstbereich
- 3: Wulstkern
- 4: Seitenwand
- 4a: Seitenwandniveau
- 4b: Seitenwandabschnitt
- 5: Gürtelverband
- 6: Radialkarkasse
- 7: Kernprofil
- 8, 8': Erhebung
- 8a, 8'a: Deckfläche
- 8b, 8'b: Seitenfläche
- 9, 9': Reihe
- 10, 10': Mikrorippe
- 11, 12, 11', 12': Zwischenraum
- a₁, a₂, a₁', a₂', b: Breite
- H: Querschnittshöhe
- h₁, h₂: Höhe
- l: Länge
- l': Kantenlänge

## Patentansprüche

1. Fahrzeugluftreifen mit einem Laufstreifen (1), einem Gürtelverband (5), einer Radialkarkasse (6) und mit Seitenwänden (4), welche jeweils in ihrem radial äußeren Bereich zumindest zwei konzentrisch zur Kreisringform der Seitenwand (4) verlaufende Reihen (9, 9') aus parallelogrammförmigen Erhebungen (8, 8') mit einer gegenüber dem sonstigen Niveau (4a) der Seitenwand (4) ermittelten Höhe (h) von 0,80 mm bis 1,50 mm aufweisen, wobei zwischen den Erhebungen (8, 8') innerhalb einer Reihe (9, 9') und zwischen einander benachbarten Reihen (9, 9') Zwischenräume (11, 11', 12, 12') mit jeweils insbesondere konstanten Breiten (a₁, a₂, a₁', a₂') vorhanden sind,
**dadurch gekenzeichnet**,
dass die Reihen (9, 9') von Erhebungen (8, 8') in Umfangsrichtung der Seitenwand (4) unter gegenseitiger Überlappung der Erhebungen (8, 8') gegeneinander versetzt sind, wobei auch die Zwischenräume (11, 11') zwischen den Erhebungen (8, 8') von Reihe (9, 9') zu Reihe (9, 9') und ohne miteinander zu fluchten in Umfangsrichtung gegeneinander versetzt sind.

2. Fahrzeugluftreifen nach Anspruch 1, **dadurch gekennzeichnet, dass** die Erhebungen (8) in sämtliche Reihen (9) in Draufsicht eine Parallelogrammform mit zwei spitzen Winkeln von 30° bis 70° aufweisen, welche Winkel in den Erhebungen (8) innerhalb einer Reihe und vorzugsweise in den Erhebungen (8) sämtlicher Reihen übereinstimmen, wobei die Erhebungen (8) in sämtlichen Reihen (9) bezüglich der Umfangsrichtung gleich ausgerichtet sind.

3. Fahrzeugluftreifen nach Anspruch 1, **dadurch gekennzeichnet, dass** die Erhebungen (8') in sämtliche Reihen (9') in Draufsicht rechteckig, insbesondere quadratisch, sind.

4. Fahrzeugluftreifen nach einem der Ansprüche 1 bis 3, **dadurch gekennzeichnet, dass** sämtliche Reihen (9, 9') innerhalb eines sich in der Umfangsrichtung erstreckenden Seitenwandabschnittes (4b) die gleiche Anzahl von Erhebungen (8, 8') aufweisen.

5. Fahrzeugluftreifen nach einem der Ansprüche 1 bis 4, **dadurch gekennzeichnet, dass** die Erhebungen (8, 8') in den Reihen (9, 9') innerhalb eines sich in der Umfangsrichtung erstreckenden Seitenwandabschnittes (4b) jeweils übereinstimmend gestaltet sind.

6. Fahrzeugluftreifen nach einem der Ansprüche 1 bis 5, **dadurch gekennzeichnet, dass** die Erhebungen (8) in der Umfangsrichtung der Seitenwand (4) eine Länge (I) von 15,00 mm bis 30,00 mm, insbesondere von mindestens 20,00 mm, und in der radialen Richtung eine Breite (b) von 5,00 mm bis 12,00 mm aufweisen.

7. Fahrzeugluftreifen nach einem der Ansprüche 1 bis 5, **dadurch gekennzeichnet, dass** in Draufsicht quadratische Erhebungen (8) eine Kantenlänge (I') von 6,00 mm bis 20,00 mm aufweisen.

8. Fahrzeugluftreifen nach einem der Ansprüche 1 bis 7, **dadurch gekennzeichnet, dass** die Erhebungen (8, 8') Seitenflächen (8b, 8'b) aufweisen, welche unter einem Winkel von 30° bis 90°, insbesondere bis 60°, gegenüber dem Niveau (4a) der Seitenwand (4) verlaufen.

9. Fahrzeugluftreifen nach einem der Ansprüche 1 bis 8, **dadurch gekennzeichnet, dass** die Breiten (a₁, a₂, a₁', a₂') der Zwischenräume (11, 11', 12, 12') zwischen den Erhebungen (8, 8') innerhalb einer Reihe (9, 9') 1,00 bis 7,00 mm, insbesondere mindestens 2,00 mm, und zwischen einander benachbarten Reihen (9, 9') 1,00 bis 5,00 mm, insbesondere mindestens 1,5 mm, betragen.

10. Fahrzeugluftreifen nach einem der Ansprüche 1 bis 9, **dadurch gekennzeichnet, dass** die Anzahl der Reihen (9, 9') drei bis fünf beträgt.

11. Fahrzeugluftreifen nach einem der Ansprüche 1 bis 10, **dadurch gekennzeichnet, dass** die Reihen (9, 9') auf der Seitenwand (4) einen Seitenwandabschnitt (4b) bedecken, welcher sich in radialer Richtung zwischen einer ersten Höhe (h₁), die 40 % bis 50 % der Querschnittshöhe (H) des Reifens beträgt, und einer zweiten Höhe (h₂), die 80 % bis 97 % der Querschnittshöhe (H) des Reifens beträgt, erstreckt.

12. Fahrzeugluftreifen nach einem der Ansprüche 1 bis 11, **dadurch gekennzeichnet, dass** die Reihen (9, 9') über zumindest einen Großteil des Umfanges der Seitenwand (4), insbesondere über zumindest drei Viertel des Umfanges, durchgehend verlaufen.

13. Fahrzeugluftreifen nach einem der Ansprüche 1 bis 12, **dadurch gekennzeichnet, dass** Zwischenräume (11, 11', 12, 12') zwischen Erhebungen (8, 8') und/oder zwischen benachbarten Reihen (9, 9') mit einer Schraffur aus parallel zueinander verlaufenden Mikrorippen (10, 10') mit vorzugsweise kuppel- oder dreieckförmigem Querschnitt mit einer maximalen Höhe von 0,20 mm bis 0,30 mm gegenüber dem Seitenwandniveau (4a) und einer ebensolchen Breite an ihrer Basis versehen sind.

14. Fahrzeugluftreifen nach Anspruch 13, **dadurch gekennzeichnet, dass** Mikrorippen (10, 10') auch über Oberflächen von Erhebungen (8, 8') verlaufen.

## Claims

1. Pneumatic vehicle tyre having a tread (1), a belt assembly (5), a radial carcass (6), and having sidewalls (4) which in each case in their radially outer region have at least two rows (9, 9') of parallelogram-shaped elevations (8, 8') with a height (h) of 0.80 mm to 1.50 mm, determined in relation to the remaining level (4a) of the sidewall (4), said rows (9, 9') running so as to be concentric with the annular shape of the sidewall (4), wherein intermediate spaces (11, 11', 12, 12') having in each case in particular constant widths (a₁, a₂, a₁', a₂') are present between the elevations (8, 8') within one row (9, 9') and between mutually adjacent rows (9, 9'), **characterized**
**in that** the rows (9, 9') of elevations (8, 8') are mutually offset in the circumferential direction of the sidewall (4), with the elevations (8, 8') overlapping one another, wherein the intermediate spaces (11, 11') between the elevations (8, 8') are also mutually offset in the circumferential direction from row (9, 9') to row (9, 9'), so as not to be co-aligned.

2. Pneumatic vehicle tyre according to Claim 1, **characterized in that** the elevations (8) in all rows (9) when viewed from above have a parallelogram shape with two acute angles of 30° to 70°, which angles in the elevations (8) match within a row and preferably in the elevations (8) of all rows, wherein the elevations (8) in all rows (9) are identically aligned in the circumferential direction.

3. Pneumatic vehicle tyre according to Claim 1, **characterized in that** the elevations (8') in all rows (9') are rectangular, in particular square, when viewed from above.

4. Pneumatic vehicle tyre according to one of Claims 1 to 3, **characterized in that** all rows (9, 9') within a sidewall portion (4b) which extends in the circumferential direction have the same number of elevations (8, 8').

5. Pneumatic vehicle tyre according to one of Claims 1 to 4, **characterized in that** the elevations (8, 8') in the rows (9, 9') within a sidewall portion (4b) which extends in the circumferential direction are in each case of identical design.

6. Pneumatic vehicle tyre according to one of Claims 1 to 5, **characterized in that** the elevations (8) in the circumferential direction of the sidewall (4) have a length (l) of 15.00 mm to 30.00 mm, in particular of at least 20.00 mm, and in the radial direction have a width (b) of 5.00 mm to 12.00 mm.

7. Pneumatic vehicle tyre according to one of Claims 1 to 5, **characterized in that**, when viewed from above, square elevations (8) have an edge length (I') of 6.00 mm to 20.00 mm.

8. Pneumatic vehicle tyre according to one of Claims 1 to 7, **characterized in that** the elevations (8, 8') have lateral faces (8b, 8'b) which run at an angle of 30° to 90°, in particular up to 60°, in relation to the level (4a) of the sidewall (4).

9. Pneumatic vehicle tyre according to one of Claims 1 to 8, **characterized in that** the widths (a₁, a₂, a₁', a₂') of the intermediate spaces (11, 11', 12, 12') between the elevations (8, 8') within a row (9, 9') are 1.00 to 7.00 mm, in particular at least 2.00 mm, and between adjacent rows (9, 9') are 1.00 to 5.00 mm, in particular at least 1.5 mm.

10. Pneumatic vehicle tyre according to one of Claims 1 to 9, **characterized in that** the number of rows (9, 9') is three to five.

11. Pneumatic vehicle tyre according to one of Claims 1 to 10, **characterized in that** the rows (9, 9') on the sidewall (4) cover a sidewall portion (4b) which in the radial direction extends between a first height (h₁), which is 40% to 50% of the cross-sectional height (H) of the tyre, and a second height (h₂), which is 80% to 97% of the cross-sectional height (H) of the tyre.

12. Pneumatic vehicle tyre according to one of Claims 1 to 11, **characterized in that** the rows (9, 9') run continuously over at least a major part of the circumference of the sidewall (4), in particular over at least three quarters of the circumference.

13. Pneumatic vehicle tyre according to one of Claims 1 to 12, **characterized in that** intermediate spaces (11, 11', 12, 12') between elevations (8, 8') and/or between adjacent rows (9, 9') are provided with a crosshatch of parallel micro-ribs (10, 10'), preferably with a dome-shaped or triangular cross-section, with a maximum height of 0.20 mm to 0.30 mm in relation to the sidewall level (4a), and a likewise width at their base.

14. Pneumatic vehicle tyre according to Claim 13, **characterized in that** micro-ribs (10, 10') also run over surfaces of elevations (8, 8').

## Revendications

1. Pneumatique de véhicule avec une bande de roulement (1), un ensemble de ceinture (5), une carcasse radiale (6) et des parois latérales (4) qui présentent chacune, dans leur zone radialement extérieure, au moins deux rangées (9, 9') concentriques à la forme en anneau de cercle de la paroi latérale (4) de reliefs (8, 8') en forme de parallélogramme ayant une hauteur (h), déterminée par rapport à l'autre niveau (4a) de la paroi latérale (4), de 0,80 mm à 1,50 mm, des espaces intermédiaires (11, 11', 12, 12') ayant respectivement des largeurs (a₁, a₂, a₁', a₂') notamment constantes étant présents entre les reliefs (8, 8') à l'intérieur d'une rangée (9, 9') et entre des rangées (9, 9') voisines les unes des autres,
**caractérisé en ce que**
les rangées (9, 9') de reliefs (8, 8') sont décalées les unes par rapport aux autres dans la direction périphérique de la paroi latérale (4) avec un chevauchement mutuel des reliefs (8, 8'), les espaces intermédiaires (11, 11') entre les reliefs (8, 8') étant également décalés les uns par rapport aux autres dans la direction périphérique d'une rangée (9, 9') à l'autre et sans être alignés les uns avec les autres.

2. Pneumatique de véhicule selon la revendication 1, **caractérisé en ce que** les reliefs (8) dans toutes les rangées (9) présentent, en vue de dessus, une forme de parallélogramme avec deux angles aigus de 30° à 70°, lesquels angles coïncident dans les reliefs (8) à l'intérieur d'une rangée et de préférence dans les reliefs (8) de toutes les rangées, les reliefs (8) dans toutes les rangées (9) étant orientés de la même manière par rapport à la direction périphérique.

3. Pneumatique de véhicule selon la revendication 1, **caractérisé en ce que** les reliefs (8') dans toutes les rangées (9') sont rectangulaires, notamment carrés, en vue de dessus.

4. Pneumatique de véhicule selon l'une quelconque des revendications 1 à 3, **caractérisé en ce que** toutes les rangées (9, 9') à l'intérieur d'une section de paroi latérale (4b) s'étendant dans la direction périphérique présentent le même nombre de reliefs (8, 8').

5. Pneumatique de véhicule selon l'une quelconque des revendications 1 à 4, **caractérisé en ce que** les reliefs (8, 8') dans les rangées (9, 9') à l'intérieur d'une section de paroi latérale (4b) s'étendant dans la direction périphérique sont respectivement conçues de manière concordante.

6. Pneumatique de véhicule selon l'une quelconque des revendications 1 à 5, **caractérisé en ce que** les reliefs (8) présentent, dans la direction périphérique de la paroi latérale (4), une longueur (l) de 15,00 mm à 30,00 mm, notamment d'au moins 20,00 mm, et, dans la direction radiale, une largeur (b) de 5,00 mm à 12,00 mm.

7. Pneumatique de véhicule selon l'une quelconque des revendications 1 à 5, **caractérisé en ce qu'**en vue de dessus, des reliefs carrés (8) présentent une longueur de bord (l') de 6,00 mm à 20,00 mm.

8. Pneumatique de véhicule selon l'une quelconque des revendications 1 à 7, **caractérisé en ce que** les reliefs (8, 8') présentent des surfaces latérales (8b, 8'b) qui s'étendent selon un angle de 30° à 90°, notamment jusqu'à 60°, par rapport au niveau (4a) de la paroi latérale (4).

9. Pneumatique de véhicule selon l'une quelconque des revendications 1 à 8, **caractérisé en ce que** les largeurs (a₁, a₂, a₁', a₂') des espaces intermédiaires (11, 11', 12, 12') entre les reliefs (8, 8') sont à l'intérieur d'une rangée (9, 9') de 1,00 à 7,00 mm, notamment d'au moins 2,00 mm, et entre des rangées (9, 9') voisines les unes des autres, de 1,00 à 5,00 mm, notamment d'au moins 1,5 mm.

10. Pneumatique de véhicule selon l'une quelconque des revendications 1 à 9, **caractérisé en ce que** le nombre de rangées (9, 9') est de trois à cinq.

11. Pneumatique de véhicule selon l'une quelconque des revendications 1 à 10, **caractérisé en ce que** les rangées (9, 9') sur la paroi latérale (4) recouvrent une section de paroi latérale (4b) qui s'étend dans la direction radiale entre une première hauteur (h₁) qui est de 40 % à 50 % de la hauteur de section transversale (H) du pneu et une deuxième hauteur (h₂) qui est de 80 % à 97 % de la hauteur de section transversale (H) du pneu.

12. Pneumatique de véhicule selon l'une quelconque des revendications 1 à 11, **caractérisé en ce que** les rangées (9, 9') sont continues sur au moins une grande partie de la périphérie de la paroi latérale (4), notamment sur au moins les trois quarts de la périphérie.

13. Pneumatique de véhicule selon l'une quelconque des revendications 1 à 12, **caractérisé en ce que** des espaces intermédiaire (11, 11', 12, 12') entre des reliefs (8, 8') et/ou entre des rangées voisines (9, 9') sont pourvus d'une hachure de micro-côtes (10, 10') s'étendant parallèlement les unes aux autres, ayant une section transversale de préférence en forme de dôme ou de triangle avec une hauteur maximale de 0,20 mm à 0,30 mm par rapport au niveau de paroi latérale (4a) et une largeur identique à leur base.

14. Pneumatique de véhicule selon la revendication 13, **caractérisé en ce que** des micro-côtes (10, 10') s'étendent également sur des surfaces de reliefs (8, 8').
